# EUROPÄISCHE PATENTANMELDUNG

(11) **EP 2 633 750 A1**
(43) Veröffentlichungstag der Anmeldung: **04.09.2013**
(21) Anmeldenummer: 12001448.5
(22) Anmeldetag: 02.03.2012
(51) Int. Cl.: A01G 3/06

(54) **Messer**

(71) Anmelder: Andreas Stihl AG & Co. KG, 71336 Waiblingen (DE)
(72) Erfinder: Stark, Thomas, Dipl.-Ing., 71336 Waiblingen (DE); Häberlein, Jürgen, Dipl.-Ing., 71540 Murrhardt (DE); Günther, David, Dipl.-Ing., 71332 Waiblingen (DE)
(74) Vertreter: Reinhardt, Annette

(57) **Zusammenfassung**

Ein Messer für ein Arbeitsgerät besitzt einen ebenen Befestigungsbereich (29), der in einer Befestigungsebene (51) liegt. Das Messer (16, 42, 43, 44, 47, 48, 49) besitzt mindestens einen von dem Befestigungsbereich (29) auskragenden Arm (30, 31) mit einem freien Ende (52). Der Arm (30, 31) weist einen ersten Abschnitt (40) auf, der sich aus der Befestigungsebene (51) erstreckt. Ein einfacher Aufbau, ein gutes Schnittergebnis sowie eine hohe Lebensdauer werden erreicht, wenn der Arm (30, 31) einen zweiten Abschnitt (41) besitzt, in dem der Arm (30, 31) zurück in Richtung Befestigungsebene (51) verläuft.

## Beschreibung

Die Erfindung betrifft ein Messer für ein Arbeitsgerät, insbesondere für einen Furchenschneider (bed redefiner), einen Kantenschneider (edger) oder dgl..

Aus der US 4,072,195 ist ein Messer für einen Kantenschneider bekannt, das einen mittigen Befestigungsbereich besitzt, von dem sich zwei Arme nach außen erstrecken. Die äußeren Abschnitte der Arme sind schaufelförmig ausgebildet und erstrecken sich vom Befestigungsbereich des Messers weg.

Aus der DE 297 09 152 U1 ist ein Messer für eine Rasenkanten-Fräsmaschine bekannt, das nach außen ragende, aus der Befestigungsebene gebogene Arme besitzt. Beim Einsatz dieses Messers mit einem Furchenschneider verläuft die dem Furchenschneider zugewandte Kante der Furche im Boden geneigt.

Die US 6,302,219 B1 zeigt ein Messer für einen Furchenschneider, das als Rahmenkonstruktion ausgeführt ist. Das Messer besitzt einen vergleichsweise komplexen Aufbau.

Der Erfmdung liegt die Aufgabe zugrunde, ein Messer der gattungsgemäßen Art zu schaffen, das einen einfachen Aufbau besitzt und ein gutes Arbeitsergebnis liefert.

Diese Aufgabe wird durch ein Messer für ein Arbeitsgerät mit den Merkmalen des Anspruchs 1 gelöst.

Der auskragende Arm kann einfach, ohne aufwendige Rahmenkonstruktion oder dgl. hergestellt werden. Durch den auskragenden Arm kann ein kontrollierter Verschleiß des Messers erreicht werden. Bei Messern, die als Rahmenkonstruktion ausgebildet sind, kann ein Verschleiß in einem Bereich, der zwei Abschnitte des Messers miteinander verbindet, dazu führen, dass das Messer auseinander bricht. Ein Auseinanderbrechen des Messers an einer Verschleißstelle kann durch die Ausbildung des Messers mit mindestens einem vom Befestigungsbereich auskragenden Arm auf einfache Weise vermieden werden. Dadurch, dass sich der Arm zunächst aus der Befestigungsebene hinaus und dann wieder zurück in Richtung Befestigungsebene erstreckt, ergibt sich eine hohe mechanische Stabilität des Messers. Aufgrund der sich ergebenden Ausrichtung des Arms im zweiten Abschnitt wird beim Einsatz des Messers an einem Furchenschneider oder Beetkantenschneider erreicht, dass die dem Furchenschneider zugewandte Kante der erstellten Furche etwa senkrecht und die dem Gerät abgewandte Kante geneigt verläuft. Dadurch wird eine vorteilhafte Geometrie der gezogenen Furche erreicht. Der Furchenschneider kann über die Rasenfläche gezogen werden, und der Furchenschneider erzeugt dabei eine scharfe, insbesondere etwa senkrecht verlaufende Begrenzungskante der Rasenfläche. Eine aufwendige Rahmenkonstruktion des Messers kann vermieden werden. Der Befestigungsbereich ist dabei der Bereich des Messers, mit dem das Messer an dem Arbeitsgerät befestigt wird. Der Befestigungsbereich kann hierzu vorteilhaft eine Befestigungsöffnung besitzen. Auch andere Mittel zur Befestigung können im Befestigungsbereich vorgesehen sein. Die Befestigungsebene verläuft dabei vorteilhaft senkrecht zu einer Drehachse des Messers. Der erste Abschnitt und der zweite Abschnitt des Messers müssen dabei nicht aneinander angrenzend angeordnet sein, sondern zwischen dem ersten und dem zweiten Abschnitt können ein oder mehrere weitere Abschnitte des Messers angeordnet sein. An den zweiten Abschnitt können sich bezogen auf die Drehachse des Messers nach außen weitere Abschnitte anschließen.

Vorteilhaft ist der Arm in dem zweiten Abschnitt eben ausgebildet und verläuft zur Befestigungsebene um einen Winkel geneigt. Der Winkel, den der Arm in dem zweiten Abschnitt mit der Befestigungsebene einschließt, beträgt vorteilhaft von etwa 30° bis etwa 80°. Als besonders vorteilhaft hat sich ein Winkel von etwa 40° bis etwa 70°, insbesondere von etwa 50° bis etwa 60° herausgestellt. Vorteilhaft erstreckt sich der zweite Abschnitt bis zu dem freien Ende, so dass das Messer in dem an das freie Ende angrenzenden Bereich bereits in dem genannten Winkel verläuft. Dadurch, dass das freie Ende des Messers bezogen auf die Drehachse des Messers radial außen liegt, verschleißt das Messer kontrolliert von außen nach innen. Ein übermäßiger Verschleiß an einer Stelle, die zwei Abschnitte des Messers miteinander verbindet, kann dadurch verhindert werden. Dadurch wird ein Auseinanderbrechen des Messers aufgrund von Verschleiß vermieden.

Das Messer verläuft im zweiten Abschnitt vorteilhaft bis nahe an die Befestigungsebene. Das freie Ende des Arms besitzt zur Befestigungsebene vorteilhaft einen senkrecht zur Befestigungsebene gemessenen Abstand von weniger als etwa 25% der senkrecht zur Befestigungsebene gemessenen Höhe des Messers. Insbesondere beträgt der Abstand weniger als etwa 10% der Höhe des Messers. Besonders vorteilhaft ist das freie Ende näherungsweise in der Befestigungsebene angeordnet. Der erste Abschnitt ist gegenüber der Befestigungsebene vorteilhaft um einen Winkel geneigt, der von etwa 30° bis etwa 80°, insbesondere von etwa 50° bis etwa 70° beträgt. Besonders vorteilhaft verläuft der Arm im ersten Abschnitt und im zweiten Abschnitt näherungsweise eben. Auch ein bogenförmiger oder abgewinkelter Verlauf des Arms im ersten Abschnitt kann jedoch vorteilhaft sein. Der Arm besitzt vorteilhaft eine näherungsweise V-förmige Gestalt.

Der Arm ist vorteilhaft in einem ersten Biegebereich an einer ersten Biegelinie aus der Befestigungsebene und in einem zweiten Biegebereich an einer zweiten Biegelinie zurück in Richtung Befestigungsebene gebogen. Dadurch kann auf einfache Weise der gewünschte Verlauf des Messers im zweiten Abschnitt in Richtung zur Befestigungsebene hin erreicht werden. Die erste und die zweite Biegelinie verlaufen dabei vorteilhaft parallel zueinander. Eine besonders vorteilhafte Gestaltung ergibt sich, wenn die erste und die zweite Biegelinie zur Längsseite des Messers um einen Winkel geneigt verlaufen, der weniger als 90° beträgt. Der Winkel beträgt insbesondere von etwa 70° bis etwa 85°. Durch die geringfügige Neigung der Biegelinie zur Längsseite des Messers wird eine Schrägstellung der Abschnitte des Messers zur Bewegungsrichtung erreicht. Die Biegelinie verläuft dabei vorteilhaft so, dass der in der vorgesehenen Drehrichtung des Messers hinten liegende Bereich im zweiten Abschnitt des Arms des Messers weiter innen, also näher an der Drehachse liegt. Dadurch wirkt das Messer insbesondere im zweiten Abschnitt als Schaufel und fördert Schnittgut weiter.

Der Arm besitzt eine in Drehrichtung vorne und eine in Drehrichtung hinten liegende Seite. Benachbart zum freien Ende des Messers ist vorteilhaft in Drehrichtung vorne ein Verschleißabschnitt angeordnet, wobei in dem Verschleißabschnitt die Breite des Messers vergrößert ist. Der Verschleißabschnitt ist insbesondere etwa dreieckförmig. Vorteilhaft besitzt das Messer zwei einander gegenüberliegende Arme. Ein Messer mit zwei einander gegenüberliegenden Armen ist einfach herstellbar. Es hat sich gezeigt, dass sich bei einem Messer mit zwei einander gegenüberliegenden Armen ein gutes Arbeitsergebnis ergibt. Der Grundkörper des Messers kann dabei näherungsweise rechteckförmig sein. Vorteilhaft ist das Messer aus einem einzigen Blechteil gebogen. Die Blechdicke beträgt dabei vorteilhaft von etwa 3 mm bis etwa 10 mm, insbesondere von etwa 5 mm bis etwa 8 mm. Durch die vergleichsweise hohe Blechdicke wird eine hohe Verschleißfestigkeit erreicht. Dies ist insbesondere beim Einsatz des Messers in einem Furchenschneider vorteilhaft. Aufgrund des beispielsweise beim Einsatz in einem Furchenschneider gegebenen hohen Verschleißes ist ein kostengünstiges Messer wünschenswert, das häufiger ausgewechselt werden kann. Dies wird durch die Ausbildung des Messers als Blechbiegeteil und die einteilige Ausbildung des Messers erreicht.

Ein Ausführungsbeispiel der Erfindung wird im Folgenden anhand der Zeichnung erläutert. Es zeigen:
- Fig. 1: eine schematische Seitenansicht eines Furchenschneiders mit einem daran angeordneten Messer,
- Fig. 2: eine schematische Seitenansicht des Furchenschneiders in Richtung des Pfeils II in Fig. 1,
- Fig. 3: eine perspektivische Darstellung des Schneidkopfs des Furchenschneiders,
- Fig. 4: eine Seitenansicht auf den Schneidkopf des Furchenschneiders,
- Fig. 5: eine perspektivische Darstellung des Messers des Furchenschneiders,
- Fig. 6: eine Seitenansicht des Messers etwa in Richtung des Pfeils VI in Fig. 5,
- Fig. 7: eine Seitenansicht in Richtung des Pfeils VII in Fig. 6,
- Fig. 8: eine Seitenansicht in Richtung des Pfeils VIII in Fig. 7,
- Fig. 9 bis Fig. 14: Seitenansichten von Ausführungsbeispielen des Messers,
- Fig. 15: eine schematische Seitenansicht eines Freischneiders.

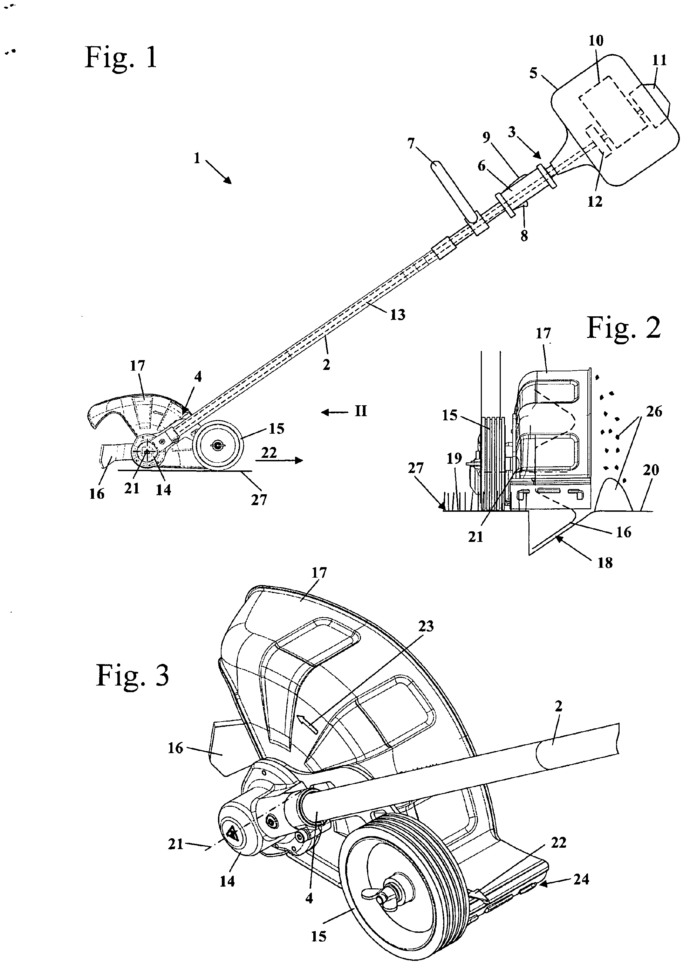

Fig. 1 zeigt als Ausführungsbeispiel für ein handgeführtes Arbeitsgerät einen Furchenschneider 1. Derartige Furchenschneider, auch Beetkantenschneider (bed redefmer) genannt, werden genutzt, um zwischen einer Rasenfläche und angrenzenden Beetflächen oder dgl. eine Furche zu ziehen und so eine deutliche Abgrenzung zwischen diesen Flächen zu schaffen. Das Messer der vorliegenden Erfmdung kann jedoch auch bei anderen Arbeitsgeräten wie beispielsweise bei Kantenschneidern (edger) oder dgl. eingesetzt werden. Auch ein Einsatz bei Freischneidern, insbesondere als Häckselmesser, kann vorteilhaft sein.

Der Furchenschneider 1 besitzt ein Führungsrohr 2, an dessen erstem, im üblichen Betrieb oberen Ende 3 ein Motorgehäuse 5 festgelegt ist. Am anderen, zweiten Ende 4, das im Betrieb dem Boden 27 zugewandt liegt, ist ein Schneidkopf angeordnet. Benachbart zum Motorgehäuse 5 ist am Führungsrohr 2 ein Handgriff 6 festgelegt, der das Führungsrohr 2 umgreift und an dem ein Gashebel 8 sowie eine Gashebelsperre 9 gelagert sind. Auch weitere Bedienelemente können am Handgriff 6 angeordnet sein. An der dem Schneidkopf zugewandten Seite des Handgriffs 6 ist am Führungsrohr 2 in geringem Abstand zum Handgriff 6 ein Griffbügel 7 angeordnet. Am Handgriff 6 und am Griffbügel 7 kann ein Bediener den Furchenschneider 1 führen und in einer Bewegungsrichtung 22 über den Boden 27 ziehen.

Im Motorgehäuse 5 ist ein Antriebsmotor 10 angeordnet, der im Ausführungsbeispiel ein Verbrennungsmotor ist. Der Antriebsmotor 10 kann jedoch auch ein elektrisch angetriebener Motor sein. Auch eine Anordnung des Antriebsmotors 10 am Schneidkopf kann vorteilhaft sein. Am Antriebsmotor 10 ist eine Anwerfvorrichtung 11 angeordnet, die vorteilhaft ein Seilzugstarter ist. Der Antriebsmotor 10 ist über eine Fliehkraftkupplung 12 mit einer Antriebswelle 13 verbunden. Die Antriebswelle 13 durchragt das Führungsrohr 2 und treibt über ein nicht gezeigtes, in einem Getriebegehäuse 14 angeordnetes Winkelgetriebe ein Werkzeug, nämlich ein Messer 16 um eine Drehachse 21 rotierend an. Die Drehachse 21 verläuft senkrecht zur Längsrichtung des Führungsrohrs 2 und etwa parallel zum Boden 27. Das Messer 16 ist teilweise von einer Schutzhaube 17 abgedeckt. Die Schutzhaube 17 erstreckt sich überwiegend auf der dem Bediener zugewandten Seite des Messers 16, also in Bewegungsrichtung 22 vor und oberhalb des Messers 16. Im in Bewegungsrichtung 22 vorne liegenden Bereich der Schutzhaube 17 ist benachbart zur Schutzhaube 17 ein Rad 15 angeordnet, das im Betrieb über den Boden 27 rollt.

Wie Fig. 2 zeigt, wird das Rad 15 vorteilhaft über eine Rasenfläche 19 bewegt, und zwar derart, dass das Messer 16 zwischen der Rasenfläche 19 und einer angrenzenden Beetfläche 20 angeordnet ist. Im Betrieb erzeugt das Messer 16 eine Furche 18 zwischen der Rasenfläche 19 und der Beetfläche 20. Die Furche 18 verläuft an der an die Rasenfläche 19 angrenzenden Seite senkrecht zur Fläche des Bodens 27 und an der an die Beetfläche 20 angrenzenden Seite in einem Winkel geneigt. Die Geometrie des Querschnitts der Furche 18 wird von der Geometrie des Messers 16 bestimmt. Wie Fig. 2 zeigt, wird das aus der Furche 18 ausgehobene Erdreich 26 seitlich neben die Furche 18 gefördert und in den Bereich der Beetfläche 20 ausgeworfen.

Wie Fig. 3 zeigt, ist an der Schutzhaube 17 an dem in Bewegungsrichtung 22 vorne liegenden Bereich eine Gleitkufe 24 angeformt. An der Schutzhaube 17 ist ein Pfeil ausgebildet, der die Bewegungsrichtung 22 anzeigt, sowie ein weiterer Pfeil, der die Drehrichtung 23 des Messers 16 anzeigt.

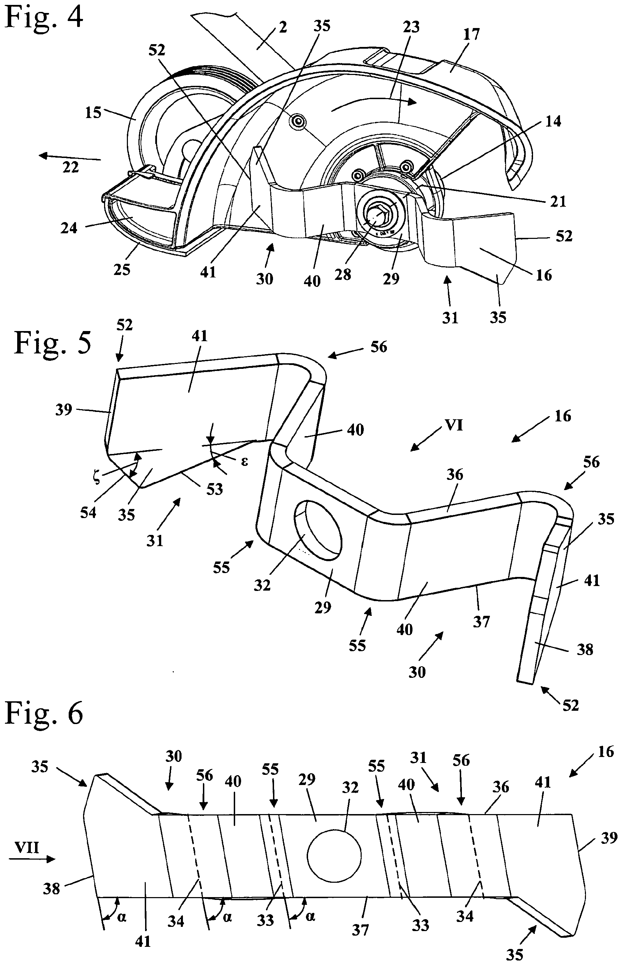

Wie Fig. 4 zeigt, ist die Gleitkufe 24 von einem Spritzschutz 25 abgedeckt. Der Spritzschutz 25 ist im Ausführungsbeispiel als flexibler Lappen ausgebildet und kann von der Gleitkufe 24 teilweise nach unten klappen.

Wie Fig. 4 zeigt, besitzt das Messer 16 einen mittigen Befestigungsbereich 29, an dem das Messer 16 an einer nicht gezeigten Antriebswelle, die vorteilhaft aus dem Getriebegehäuse 14 ragt, mit einer Befestigungsschraube 28 festgelegt ist. Wie Fig. 5 zeigt, besitzt das Messer 16 eine Befestigungsöffnung 32 im Befestigungsbereich 29, durch die die Befestigungsschraube 28 ragt. Das Messer 16 besitzt zwei bezogen auf die Drehachse 21 radial nach außen auskragende Arme 30 und 31, die um die Drehachse 21 rotationssymmetrisch zueinander ausgebildet sind. Jeder Arm 30, 31 besitzt einen ersten, inneren Abschnitt 40 sowie einen zweiten, äußeren Abschnitt 41. Die äußeren Abschnitte 41 erstrecken sich bis zu den freien Enden 52 der Arme 30, 31.

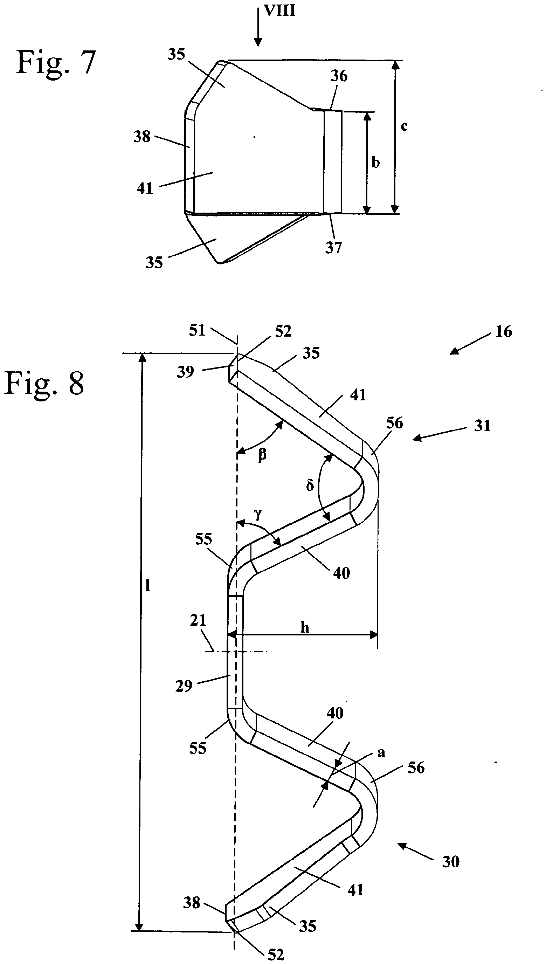

Fig. 5 zeigt den Aufbau des Messers 16 im Einzelnen. Das Messer 16 ist als Blechbiegeteil aus einem einzigen Blechzuschnitt hergestellt. Der Blechzuschnitt besitzt eine längliche, näherungsweise rechteckige Gestalt. Das Messer 16 besitzt eine näherungsweise W-förmige Gestalt. Die Arme 30 und 31 verlaufen jeweils etwa V-förmig und erstrecken sich von gegenüberliegenden Seiten des Befestigungsbereichs 29 bezogen auf die Drehachse 21 nach außen. An den Befestigungsbereich 29 schließt sich an den gegenüberliegenden Seiten jeweils ein erster Biegebereich 55 an, in dem das Blech des Messers 16 aus der in Fig. 8 gezeigten Befestigungsebene 51 herausgebogen ist. Die Befestigungsebene 51 ist die Ebene, in der der Befestigungsbereich 29 liegt. Die Befestigungsebene 51 liegt, wie Fig. 8 zeigt, in Blickrichtung senkrecht zur Drehachse 21 in der geometrischen Mitte des Befestigungsbereichs 29. Die Befestigungsebene 51 und der Befestigungsbereich 29 verlaufen senkrecht zur Drehachse 21.

An jeden ersten Biegebereich 55 schließt ein erster Abschnitt 40 an, der im Ausführungsbeispiel eben und zur Befestigungsebene 51 um den in Fig. 8 gezeigten Winkel γ geneigt verläuft. Der Winkel γ beträgt vorteilhaft von etwa 30° bis etwa 80°, insbesondere von etwa 50° bis etwa 70°. Im Ausführungsbeispiel ist ein Winkel γ von näherungsweise 65° vorgesehen. An die ersten Abschnitte 40 schließt sich ein zweiter Biegebereich 56 an, in dem das Blech des Messers 16 in Gegenrichtung, also zurück in Richtung auf die Befestigungsebene 51 gebogen ist. An die zweiten Biegebereiche 56 schließen sich zweite Abschnitte 41 an, in denen das Messer 16 ebenfalls eben und zur Befestigungsebene 51 um den in Fig. 8 gezeigten Winkel β geneigt ist. Der Winkel β beträgt vorteilhaft von etwa 30° bis etwa 80°, insbesondere von etwa 40° bis etwa 70°. Besonders vorteilhaft beträgt der Winkel β von etwa 50° bis etwa 60°. Im Ausführungsbeispiel beträgt der Winkel β näherungsweise 55°. Vorteilhaft ist der Winkel β etwas kleiner als der Winkel γ. Die beiden Abschnitte 40 und 41 bilden zusammen ein V. Die Abschnitte 40 und 41 schließen miteinander einen Winkel δ ein, der vorteilhaft von etwa 50° bis etwa 80° beträgt. Im Ausführungsbeispiel beträgt der Winkel δ näherungsweise 65°. Die Summe der Winkel β, γ und δ beträgt dabei immer 180°.

Wie Fig. 8 zeigt, besitzt das Messer 16 eine parallel zur Drehachse 21 und senkrecht zur Befestigungsebene 51 gemessene Höhe h. Die freien Enden 52 sind vorteilhaft nahe der Befestigungsebene 51 angeordnet. Vorteilhaft beträgt der Abstand der freien Enden 52 zur Befestigungsebene 51 weniger als 25%, insbesondere weniger als 10% der Höhe h. Im Ausführungsbeispiel sind die freien Enden 52 in der Befestigungsebene 51 angeordnet.

Wie Fig. 5 auch zeigt, ist am freien Ende 52 des ersten Arms 30 eine erste Außenseite 38 des Messers 16 angeordnet und am freien Ende 52 des zweiten Arms 31 eine zweite Außenseite 39. Die Außenseiten 38 und 39 sind die Stirnseiten des das Messer 16 bildenden Blechs. Das Messer 16 besitzt eine erste Längsseite 36 und eine zweite Längsseite 37.

Die Längsseiten 36 und 37 verbinden die Außenseiten 38 und 39. Wie Fig. 5 zeigt, ist jeweils an der in Drehrichtung 23 vorne liegenden Seite eines Arms 30, 31 am zweiten Abschnitt 41 ein Verschleißabschnitt 35 angeordnet (siehe auch Fig. 4). Wie Fig. 5 zeigt, besitzt der Verschleißabschnitt 35 am zweiten Arm 31 eine näher am Befestigungsbereich 29 liegende Innenkante 53 sowie eine weiter vom Befestigungsbereich 29 entfernte Außenkante 54. Die Innenkante 53 schließt mit der Längsseite 37 des Messers 16 einen Winkel ε ein, der vorteilhaft von etwa 10° bis etwa 40° beträgt. Die Außenkante 54 schließt mit der Verlängerung der Längsseite 37 einen Winkel ζ ein, der vorteilhaft größer als der Winkel ε ist und der vorteilhaft von etwa 40° bis etwa 80° beträgt. Der Verschleißabschnitt 35 ist in dem Bereich des Messers 16 angeordnet, der zuerst mit Schnittgut, Erdreich oder dgl. in Kontakt kommt. Im Verschleißabschnitt 35 ist das Material des Messers 16 deshalb besonders stark dem Verschleiß ausgesetzt.

Wie Fig. 7 zeigt, besitzt das Messer 16 am Verschleißabschnitt 35 eine Gesamtbreite c, die deutlich größer als die Breite b im Befestigungsabschnitt 29 oder im ersten Abschnitt 40 ist. Die Breite c kann beispielsweise etwa das 1,2fache bis 2fache der Breite b betragen. Die Breite b ist dabei parallel zur Befestigungsebene 51 des Messers 16 und senkrecht zur Drehachse 21 (Fig. 8) gemessen.

Fig. 6 zeigt die Ausrichtung der Biegebereiche 55 und 56. In den Biegebereichen 55 ist das Blech des Messers 16 etwa an einer Biegelinie 33 umgebogen und in den Biegebereichen 56 etwa an einer zweiten Biegelinie 34. Wie Fig. 6 zeigt, verlaufen die Biegelinien 33 und 34 parallel zueinander und parallel zu den Außenseiten 38 und 39 des Messers 16. Die Biegelinien 33 und 34 verlaufen zu den Längsseiten 36 und 37 des Messers 16 um einen Winkel α geneigt, der kleiner als 90° ist. Der Winkel α beträgt vorteilhaft etwa 70° bis etwa 85°. Der Winkel α ist dabei so ausgerichtet, dass in den zweiten Abschnitten 41 die in Drehrichtung 23 hinten liegende Seite des Messers 16 jeweils bezogen auf die Drehachse 21 weiter innen liegt als die in Drehrichtung vorne liegende Seite, die den Verschleißabschnitt 35 trägt. Dies ist in Fig. 8 sichtbar. Durch die Neigung der ebenen Abschnitte 41 gegenüber der Bewegungsrichtung des Messers 16 wird ein verbessertes Schnittergebnis erreicht, und Schnittgut oder ausgehobenes Erdreich wird vom Messer 16 mitgefördert. Dadurch kann ein guter Auswurf sichergestellt werden.

Wie Fig. 8 zeigt, besitzt das Messer 16 eine Länge 1, die von der ersten Außenseite 38 zur zweiten Außenseite 39 gemessen ist und die ein Vielfaches der Höhe h beträgt. Die Länge 1 beträgt vorteilhaft mindestens das Doppelte, insbesondere mindestens das 3fache der Höhe h. Vorteilhaft beträgt die Länge 1 weniger als das 5fache der Höhe h. Wie Fig. 8 auch zeigt, besitzt das das Messer 16 bildende Blechteil eine Blechdicke a. Die Blechdicke a beträgt vorteilhaft etwa 3 mm bis etwa 10 mm, insbesondere etwa 5 mm bis etwa 8 mm. Die Blechdicke a ist damit im Vergleich zu üblichen Messern 16 vergleichsweise groß. Dadurch wird eine hohe Standfestigkeit und eine hohe Stabilität des Messers 16 erreicht.

Im Ausführungsbeispiel ist ein Messer 16 gezeigt, das zwei einander gegenüberliegende Arme 30, 31 besitzt. Es kann jedoch auch vorteilhaft sein, ein Messer 16 mit mehr als zwei Armen 30, 31 zu versehen. Das Messer 16 ist in dem jeweils zwischen den Armen 30 und 31 liegenden Bereich zur Befestigungsebene 51 hin offen. Das Messer 16 ist nicht als geschlossene Rahmenkonstruktion ausgeführt, sondern aus einem einzigen, einteiligen Blechteil durch Umbiegen in den Biegenbereichen 55 und 56 hergestellt. Dadurch ergibt sich ein einfacher Aufbau.

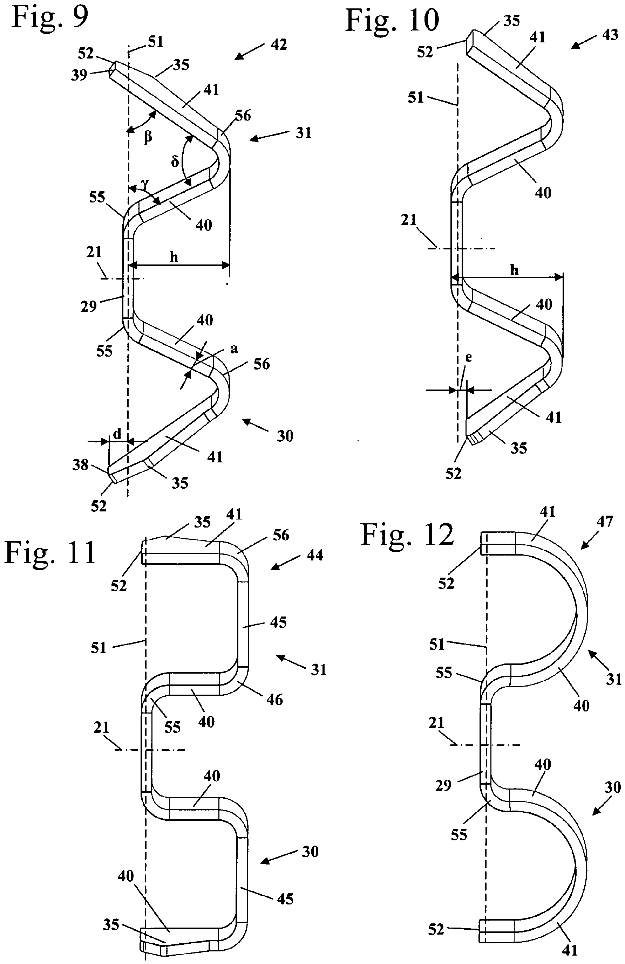

Die Figuren 9 bis 14 zeigen weitere Ausführungsbeispiele für Messer für einen Furchenschneider 1.

Fig. 9 zeigt ein Messer 42, dessen Aufbau im Wesentlichen dem des Messers 16 entspricht. Gleiche Bezugszeichen kennzeichnen in allen Figuren einander entsprechende Elemente. Das in Fig. 9 gezeigte Messer 42 besitzt freie Enden 52, die über die Befestigungsebene 51 hinaus auf die dem Getriebegehäuse 14 (Fig. 3) zugewandte Seite ragen. Die zweiten Abschnitte 41 sind länger ausgeführt als die ersten Abschnitte 40 des Messers 16. Auch die Höhe h des Messers 42 ist größer als die des Messers 16. Wie Fig. 9 zeigt, besitzen die freien Enden 52 einen parallel zur Drehachse 21 gemessenen Abstand d zur Befestigungsebene 51. Der Abstand d beträgt vorteilhaft weniger als etwa 25%, insbesondere weniger als etwa 20% der Höhe h. Aufgrund der Verlängerung des Messers 42 in den Abschnitten 41 kann mit dem Messer 42 ein breiterer Graben hergestellt werden als mit dem Messer 16.

Fig. 10 zeigt als weiteres Ausführungsbeispiel ein Messer 43, dessen Aufbau ebenfalls etwa dem des Messers 16 entspricht. Allerdings sind die zweiten Abschnitte 41 des Messers 43 kürzer ausgeführt als die des Messers 16. Aufgrund der kürzeren Ausbildung des Messers 43 in den Abschnitten 41 ist der mit dem Messer 43 hergestellte Graben schmaler als ein mit dem Messer 16 hergestellter Graben. Die freien Enden 52 enden bereits vor der Befestigungsebene 51. Die Befestigungsebene 51 schneidet die zweiten Abschnitte 41 nicht. Die freien Enden 52 besitzen zur Befestigungsebene 51 einen Abstand e, der vorteilhaft weniger als 25%, insbesondere weniger als 20% der Höhe h beträgt. Im Ausführungsbeispiel beträgt der Abstand e weniger als 15% der Höhe h.

Bei dem in Fig. 11 gezeigten Ausführungsbeispiel eines Messers 44 verlaufen die beiden Arme 30 und 31 im ersten Abschnitt 40 näherungsweise senkrecht zur Befestigungsebene 51. An die ersten Abschnitte 40 schließt sich ein Biegebereich 46 an, in dem die Arme 30, 31 näherungsweise um 90° gebogen sind. An den Biegebereich 46 schließt sich ein dritter Abschnitt 45 der Arme 30, 31 an, in dem das Messer 44 etwa parallel zur Befestigungsebene 51 verläuft. In einem an den dritten Abschnitt 45 anschließenden zweiten Biegebereich 56 sind die Arme 30, 31 nochmals um etwa 90° umgebogen, wobei das Messer in dem an den zweiten Biegebereich 56 verlaufenden Abschnitt 41 zurück zur Befestigungsebene 51 verläuft. In den zweiten Abschnitten 41 verläuft das Messer dabei ebenfalls näherungsweise senkrecht zur Befestigungsebene 51. Mit dem Messer 44 kann ein Graben hergestellt werden, der einen näherungsweise rechteckigen Querschnitt besitzt.

Fig. 12 zeigt als weiteres Ausführungsbeispiel ein Messer 47, dessen Arme 30, 31 etwa halbkreisförmig verlaufen. Benachbart zum Befestigungsbereich 29 sind die beiden Arme 30, 31 an ersten Biegebereichen 55 näherungsweise rechtwinklig aus der Befestigungsebene 51 herausgebogen. In den an den ersten Biegebereich 55 anschließenden Abschnitten verlaufen die Arme 30, 31 in einem durchgängigen, kreisförmigen Bogen. Der kreisförmige Bogen umfasst erste Abschnitte 40, in denen sich das Messer 47 von der Befestigungsebene 51 entfernt, sowie zweite Abschnitte 41, in denen das Messer 47 zurück in Richtung zur Befestigungsebene 51 verläuft. Benachbart zu den freien Enden 52 besitzen die Arme 30, 31 einen kurzen, gerade und senkrecht zur Befestigungsebene 51 verlaufenden Bereich. Die Arme 30 und 31 enden näherungsweise in der Befestigungsebene 51.

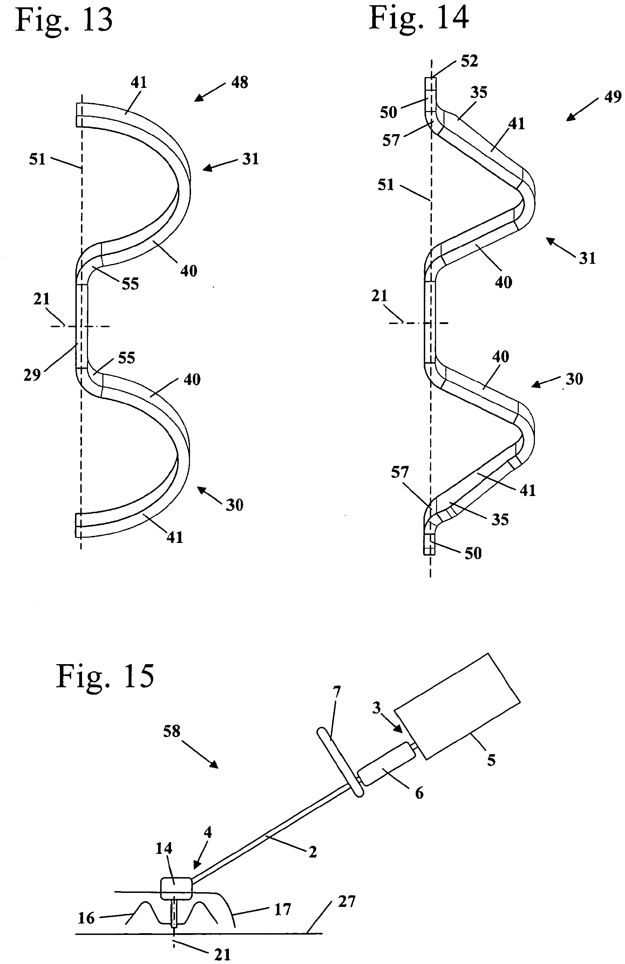

Das in Fig. 13 gezeigte Messer 48 besitzt eine ähnliche Gestalt wie das Messer 47, allerdings verlaufen die Arme 30 und 31 nicht kreisförmig gebogen, sondern näherungsweise elliptisch gebogen. Die freien Enden 52 der Messer 47 und 48 sind näherungsweise in der Befestigungsebene 51 angeordnet. Es kann jedoch bei den Ausführungsbeispielen nach den Fig. 11 bis 13 auch vorteilhaft sein, wenn die Arme 30, 31 bereits vor der Befestigungsebene 51 enden oder wenn die Arme 30, 31 über die Befestigungsebene 51 hinaus geführt sind.

Das in Fig. 14 gezeigte Messer 49 entspricht weitgehend dem Messer 16, wobei an den zweiten Abschnitten 41 dritte Abschnitte 50 anschließen. Die freien Enden 52 sind an den dritten Abschnitten 50 angeordnet. Die Arme 30, 31 sind an dritten Biegebereichen 57, die an dem radial außen liegenden Bereich der zweiten Abschnitte 41 angeordnet sind, umgebogen. An die dritten Biegebereiche 57 schließen die dritten Abschnitte 50 an. Die dritten Abschnitte 50 verlaufen parallel zur Befestigungsebene 51. Im Ausführungsbeispiel liegen die dritten Abschnitte 50 in der Befestigungsebene 51. Es kann jedoch auch vorgesehen sein, dass die dritten Abschnitte 50 einen Abstand zur Befestigungsebene 51 besitzen. Dabei können die zweiten Abschnitte 41 verkürzt ausgebildet sein, so dass die zweiten Abschnitte 41 vor der Befestigungsebene 51 enden, oder die zweiten Abschnitte 41 können verlängert ausgebildet sein, so dass die Befestigungsebene 51 die zweiten Abschnitte 41 schneidet. Es kann vorgesehen sein, dass die dritten Abschnitte 50 nicht parallel zur Befestigungsebene 51, sondern in einem Winkel zur Befestigungsebene 51 verlaufen. Vorteilhaft verlaufen die dritten Abschnitte 50 senkrecht zur Befestigungsebene 51. Auch ein geneigter Verlauf der dritten Abschnitte 50 zur Befestigungsebene 51, bei dem die dritten Abschnitte mit der Befestigungsebene 51 einen Winkel größer 0° und kleiner als 90° einschließen, kann vorteilhaft sein.

Auch andere Formen des Messers 16, 42, 43, 44, 47, 48, 49 können vorteilhaft sein.

Fig. 15 zeigt als Ausführungsbeispiel für ein Arbeitsgerät, an dem das Messer 16 angeordnet werden kann, einen Freischneider 58. Der Aufbau des Freischneiders 58 ähnelt dem des Furchenschneiders 1, wobei gleiche Bezugszeichen gleiche Elemente wie in den vorangegangenen Figuren bezeichnen. Beim Freischneider 58 ist im Unterschied zum Furchenschneider 1 die Drehachse 21 des Messers 16 im Betrieb etwa senkrecht zum Boden 27 ausgerichtet, während die Drehachse 21 beim Furchenschneider 1 etwa parallel zum Boden 27 verläuft. Wie Fig. 15 zeigt, besitzt der Freischneider 1 ein Führungsrohr 1, wobei an einem Ende 3 ein Motorgehäuse 5 und an einem zweiten Ende 4 ein Getriebegehäuse 14 zum Antrieb des Messers 16 um die Drehachse 21 angeordnet ist. Das Messer 16 ist von einer Schutzhaube 17 abgedeckt, die nach oben und hinten, also in Richtung auf einen benachbart zum Motorgehäuse 5 stehenden Benutzer, ragt. Alle gezeigten Messer 16, 42, 43, 44, 47, 48, 49 können auch beim Freischneider 58 eingesetzt werden.

## Patentansprüche

1. Messer für ein Arbeitsgerät, mit einem ebenen Befestigungsbereich (29), der in einer Befestigungsebene (51) angeordnet ist, wobei das Messer (16, 42, 43, 44, 47, 48, 49) mindestens einen von dem Befestigungsbereich (29) auskragenden Arm (30, 31) mit einem freien Ende (52) besitzt, wobei der Arm (30, 31) einen ersten Abschnitt (40) aufweist, der sich aus der Befestigungsebene (51) erstreckt, **dadurch gekennzeichnet, dass** der Arm (30, 31) einen zweiten Abschnitt (41) besitzt, in dem der Arm (30, 31) zurück in Richtung Befestigungsebene (51) verläuft.

2. Messer nach Anspruch 1,
**dadurch gekennzeichnet, dass** der Arm (30, 31) in dem zweiten Abschnitt (41) eben ausgebildet und gegenüber der Befestigungsebene (51) um einen Winkel (β) geneigt ist.

3. Messer nach Anspruch 2,
**dadurch gekennzeichnet, dass** der Winkel (β), den der Arm (30, 31) im zweiten Abschnitt (41) mit der Befestigungsebene (51) einschließt, von etwa 30° bis etwa 80°, insbesondere von etwa 40° bis etwa 70°, vorteilhaft von etwa 50° bis etwa 60° beträgt.

4. Messer nach einem der Ansprüche 1 bis 3,
**dadurch gekennzeichnet, dass** der zweite Abschnitt (41) sich bis zu dem freien Ende (52) erstreckt.

5. Messer nach einem der Ansprüche 1 bis 4,
**dadurch gekennzeichnet, dass** das freie Ende (52) des Arms (30, 31) zur Befestigungsebene (51) einen senkrecht zur Befestigungsebene (51) gemessenen Abstand (d, e) von weniger als etwa 25%, insbesondere weniger als etwa 10% der senkrecht zur Befestigungsebene (51) gemessenen Höhe (h) des Messers (16) besitzt.

6. Messer nach einem der Ansprüche 1 bis 5,
**dadurch gekennzeichnet, dass** der erste Abschnitt (40) gegenüber der Befestigungsebene (51) um einen Winkel (γ) geneigt ist, der von etwa 30° bis etwa 80°, insbesondere von etwa 50° bis etwa 70° beträgt.

7. Messer nach einem der Ansprüche 1 bis 6,
**dadurch gekennzeichnet, dass** der Arm (30, 31) eine etwa V-förmige Gestalt besitzt.

8. Messer nach einem der Ansprüche 1 bis 7,
**dadurch gekennzeichnet, dass** der Arm (30, 31) in einem ersten Biegebereich (55) an einer ersten Biegelinie (33) aus der Befestigungsebene (51) und in einem zweiten Biegebereich (56) an einer zweiten Biegelinie (34) zurück in Richtung Befestigungsebene (51) gebogen ist, wobei die erste Biegelinie (33) und die zweite Biegelinie (34) parallel zueinander verlaufen.

9. Messer nach Anspruch 8,
**dadurch gekennzeichnet, dass** die erste Biegelinie (33) und die zweite Biegelinie (34) zu einer Längsseite (36, 37) des Messers (16) um einen Winkel (α) geneigt verlaufen, der weniger als 90°, insbesondere von etwa 70° bis etwa 85° beträgt.

10. Messer nach einem der Ansprüche 1 bis 9,
**dadurch gekennzeichnet, dass** der Arm (30, 31) eine in Drehrichtung (23) vorne liegende Seite und eine in Drehrichtung (23) hinten liegende Seite besitzt, wobei benachbart zum freien Ende (52) des Messers (16, 42, 43, 44, 49) an der in Drehrichtung (23) vorne liegenden Seite ein Verschleißabschnitt (35) angeordnet ist, an dem die Breite (c) des Messers vergrößert ist.

11. Messer nach Anspruch 10,
**dadurch gekennzeichnet, dass** der Verschleißabschnitt (35) etwa dreieckförmig ausgebildet ist.

12. Messer nach einem der Ansprüche 1 bis 11,
**dadurch gekennzeichnet, dass** das Messer (16, 42, 43, 44, 47, 48, 49) zwei einander gegenüberliegende Arme (30, 31) besitzt.

13. Messer nach einem der Ansprüche 1 bis 12,
**dadurch gekennzeichnet, dass** das Messer (16, 42, 43, 44, 47, 48, 49) aus einem einzigen Blechteil gebogen ist, wobei die Blechdicke (a) von etwa 3 mm bis etwa 10 mm, insbesondere von etwa 5 mm bis etwa 8 mm beträgt.
